# EUROPÄISCHE PATENTSCHRIFT

(11) **EP 2 527 510 B1**
(45) Veröffentlichungstag und Bekanntmachung des Hinweises auf die Patenterteilung: **06.05.2015**
(21) Anmeldenummer: 12002013.6
(22) Anmeldetag: 22.03.2012
(51) Int. Cl.: D06F 31/00

(54) **Verfahren zum Beladen einer Wäschereimaschine**
Method for loading a laundry machine
Procédé de chargement d'une machine de laverie

(30) Priorität: 23.05.2011 DE 102011102961; 30.07.2011 DE 102011109014
(43) Veröffentlichungstag der Anmeldung: 28.11.2012
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- DE-A1- 10 238 358
- US-A1- 2008 295 257

## Beschreibung

Die Erfindung betrifft ein Verfahren zum Beladen einer Wäschereimaschine gemäß dem Oberbegriff des Anspruchs 1.

Postenweise zu beladende Wäschereimaschinen, insbesondere Waschmaschinen, Waschschleudermaschinen oder dergleichen, werden üblicherweise ausgelegt für eine bestimmte Aufnahmekapazität. Üblicherweise wird die Aufnahmekapazität der Wäschereimaschine auf das Gewicht des Wäschepostens bezogen, womit die Wäschereimaschine pro Arbeitstakt, beispielsweise pro Waschvorgang, beladen werden kann.

US 2008/295257 offenbart ein Verfahren zum Beladen einer Wäschereimaschine mit den Merkmalen des Oberbegriffs des Anspruchs 1

Je nach Wäscheart ist das Volumen eines Wäschepostens bei gleichem Gewicht größer oder kleiner. Bei leichter bzw. voluminöser Frotteewäsche verfügt der Wäscheposten bei einem bestimmten Gewicht über ein überdurchschnittlich großes Volumen. Das Volumen der Wäsche ist maßgeblich für die ordnungsgemäße Behandlung des Wäschepostens in der jeweiligen Wäschereimaschine. Bei Waschmaschinen ist es so, dass bei einem zu großen Volumen des Wäschepostens es zu einer Verblockung, also einer Verstopfung, und/oder einer Postenverschleppung kommt, und zwar insbesondere beim Umladen der Wäsche von einer Behandlungskammer in die nächste Behandlungskammer einer Durchlaufwaschmaschine. Das kann eine Beeinträchtigung des Waschergebnisses zur Folge haben und in extremen Fällen zu Funktionsstörungen der Durchlaufwaschmaschine oder einer sonstigen Wäschereimaschine führen. Um das zu verhindern, wäre es zweckmäßig, zur Festlegung der Kapazität einer Wäschereimaschine nicht das Gewicht, sondern das Volumen des zu behandelnden Wäschepostens heranzuziehen. Weil die Volumenbestimmung eines Wäschepostens bisher als nicht machbar erschien, ist ersatzweise das verhältnismäßig einfach zu ermittelnde Gewicht eines Wäschepostens als Kapazitätsangabe der Wäschereimaschinen verwendet worden. Dabei wurde aus Sicherheitsgründen das im Verhältnis zum Volumen relativ geringe Gewicht voluminöser Wäsche, insbesondere Frotteewäsche, angenommen, um mit Sicherheit die Beladung der Wäschereimaschine mit einem ein zu großes Volumen aufweisenden Wäscheposten zu vermeiden. Das führt bei Wäsche mit einem in Bezug auf das Gewicht relativ kleinen Volumen zu einer nur unzureichenden Kapazitätsauslastung der betreffenden Wäschereimaschine.

Der Erfindung liegt nun die Aufgabe zugrunde, ein Verfahren zum Beladen einer Wäschereimaschine, insbesondere einer Waschmaschine, zu schaffen, das ungeachtet der Art der zu behandelnden Wäsche eine optimale Kapazitätsauslastung der Wäschereimaschine ermöglicht, ohne dass die Gefahren einer unzureichenden Behandlungsqualität der Wäsche und Funktionsstörungen der Wäschereimaschine bestehen.

Ein Verfahren zur Lösung dieser Aufgabe weist die Maßnahmen des Anspruchs 1 auf. Demnach wird in einer Entwässerungspresse das Volumen des Wäschepostens ermittelt. Dabei wird von der Erkenntnis ausgegangen, dass sehr wohl das Volumen eines Wäschepostens ermittelt werden kann, wenn dieses gezielt in der Entwässerungspresse erfolgt. Die Erfindung rückt also von der Annahme ab, das Volumen des Wäschepostens könne mit vertretbarem Aufwand nicht ermittelt werden. Weiterhin ist es vorgesehen, dass das ermittelte Volumen des Wäschepostens mit dem Aufnahmevolumen, insbesondere dem optimalen Aufnahmevolumen der Wäschereimaschine, verglichen wird. Anhand dieses Vergleichs wird dann eine Gewichtsanpassung mindestens eines Wäschepostens vorgenommen. Dadurch kann durch einfaches, übliches Wiegen vor der Beladung ein Wäscheposten gebildet werden, der dem optimalen Aufnahmevolumen der Wäschereimaschine (Sollvolumen) entspricht oder dem zumindest recht nahe kommt.

Wenn es sich bei der Wäschereimaschine um eine Waschmaschine handelt, der die Entwässerungspresse nachgeordnet ist, wird das Volumen eines Wäschepostens ermittelt, womit zuvor die Waschmaschine beladen und der auch schon gewaschen wurde. In diesem Falle erfolgt die Gewichtsanpassung mindestens eines solchen Wäschepostens, womit die Waschmaschine als nächstes bzw. später beladen wird, also eines anderen, vorzugsweise nachfolgenden, Wäschepostens. Wenn es sich bei der Wäschereimaschine jedoch um beispielsweise einen Trockner handelt, der der Entwässerungspresse nachgeordnet ist, kann das Volumen des Wäschepostens ermittelt werden, bevor hiermit der Trockner beladen wird.

Vorzugsweise wird das Aufnahmevolumen der Wäschereimaschine mit dem in der Entwässerungspresse ermittelten Volumen des Wäschepostens verglichen und bei Unterschreitung des Aufnahmevolumens ein Wäscheposten mit einem größeren Gewicht zur Beladung der Wäschereimaschine gebildet, während bei Überschreitung des Aufnahmevolumens ein Wäscheposten mit einem geringeren Gewicht gebildet wird. Bevorzugt ist es vorgesehen, das Aufnahmevolumen der Wäschereimaschine und das gemesene Volumen des Wäschepostens ins Verhältnis zu setzen und dieses Verhältnis als Faktor mit dem Gewicht des Wäschepostens, dessen Volumen in der Entwässerungspresse ermittelt worden ist, zu multiplizieren, um so ein korrigiertes Gewicht für einen Wäscheposten zu erhalten, womit als nächstes die Wäschereimaschine beladen wird, um den nächsten Wäscheposten mit optimalem Gewicht zu bilden. Damit kann mit großer Näherung ein Gewicht des Postens ermittelt werden, das in Bezug auf die Art der Wäsche desselben zum optimalen Aufnahmevolumen der Wäschereimaschinen führt.

Nach einer Weiterbildung des Verfahrens wird das Volumen des von der Wäschereimaschine behandelten Wäschepostens nach der Behandlung in der Entwässerungspresse ermittelt. Das kommt vor allem dann in Betracht, wenn es sich bei der Wäschereimaschine um eine Waschmaschine bzw. eine Durchlaufwaschmaschine handelt. In Abhängigkeit vom ermittelten Volumen des behandelten Wäschepostens wird dann das Gewicht mindestens eines nächsten Wäschepostens, womit die Wäschereimaschine, insbesondere Waschmaschine, beladen werden soll, so verändert, dass das zu erwartende Volumen dieses als nächstes zu behandelnden Wäschepostens dem Aufnahmevolumen der Wäschereimaschine, insbesondere der Waschmaschine, entspricht oder dem Aufnahmevolumen der Wäschereimaschine möglichst nahe kommt.

Des Weiteren ist bevorzugt vorgesehen, durch eine Volumenmessung mehrerer oder aller Wäscheposten in der Entwässerungspresse iterativ, insbesondere aufgrund mehrerer Volumenmessungen, das Gewicht des Wäschepostens, insbesondere eines als nächstes oder später zu behandelnden Wäschepostens, so zu verändern oder zu korrigieren, dass die Wäscheposten, womit die Wäschebehandlungsmaschine als nächstes zu beladen ist, ein Volumen aufweisen, das dem Wäscheaufnahmevolumen der Wäschereimaschine entspricht oder möglichst nahekommt. Dadurch sind schrittweise Korrekturen des Gewichts folgender Wäscheposten möglich, ohne dass die Gefahr besteht, dass bei Inhomogenitäten der Wäsche unterschiedlicher Wäscheposten die Wäschereimaschine mit einem Wäscheposten beladen wird, dessen Volumen das Aufnahmevolumen der Wäschereimaschine übersteigt.

Gemäß einer anderen vorteilhaften Ausgestaltung des Verfahrens erfolgt die Anpassung des Gewichts der Wäscheposten, insbesondere späterer Wäscheposten zur Beladung der Wäschereimaschine, an das in der Entwässerungspresse ermittelte Volumen des Wäschepostens bezogen auf Wäscheposten aus Wäsche vergleichbarer Art und/oder gleicher Behandlungskriterien. Dadurch wird sichergestellt, dass beim Wechsel der Art der Wäsche nicht Ergebnisse der Volumenmessung spezifisch leichter Wäsche zur Bildung von Wäscheposten aus spezifisch schwerer Wäsche herangezogen werden, was eine mangelnde Kapazitätsauslastung zur Folge hätte und im umgekehrten Falle eine Überbeladung zur Folge hätte. Realisierbar ist diese Vorgehensweise zweckmäßigerweise, indem die vorangegangenen Volumenmessungen herangezogen werden zur Bildung von Wäscheposten aus Wäsche gleicher Art, was anhand des jeweiligen Behandlungsprogramms sichergestellt werden kann.

Eine vorteilhafte Weiterbildung des Verfahrens sieht es vor, dass das Volumen des Wäschepostens in der Entwässerungspresse ermittelt wird, wenn ein Pressstempel bzw. Presskolben der Entwässerungspresse so weit in einen den Wäscheposten aufnehmenden Presskorb hineingefahren ist, bis eine Unterseite des Pressstempels in Kontakt mit der Wäsche im Presskorb gekommen ist. Die Wäsche ist dann in der Entwässerungspresse noch nicht zusammengepresst und auch noch nicht entwässert, wodurch das tatsächliche Volumen des Wäschepostens ermittelbar ist. Dann wird das Volumen des Wäschepostens in einem solchen Zustand ermittelt, in dem der Wäscheposten in die Wäschereimaschine geladen worden ist.

Bevorzugt ist es vorgesehen, das Volumen des Wäschepostens in der Entwässerungspresse zu ermitteln, sobald der Presskolben einen definierten Druck, insbesondere Vordruck, auf den Wäscheposten im Presskorb ausübt. Der definierte Druck kann der Druck, nämlich Luftdruck, sein, der im Inneren eines elastisch verformbaren Hohlkörpers (einer sogenannten Membran) unter dem Presskolben herrscht oder ein Druck, nämlich Hydrauliköldruck, im Hydraulikzylinder des Presskolbens zum Zusammenpressen der Wäsche. Dieser Druck liegt je nach Wäscheart im Bereich von 0,5 bar bis 10 bar, vorzugsweise 0,5 bar bis 5 bar. Dann übt die Unterseite des Presskolbens einen geringen Druck auf den Wäscheposten im Presskorb aus, der dazu führt, dass die obenliegenden Wäschestücke des Wäschepostens etwas heruntergedrückt und dabei die Oberseite des Wäschepostens im Presskorb sozusagen geglättet wird. Das führt zu einer relativ genauen, aussagekräftigen Volumenbestimmung des Wäschepostens in der Entwässerungspresse, wobei eine ungleichmäßige Schüttung der Wäsche des Wäschepostens im Presskorb ausgeglichen wird, insbesondere einzelne hochstehende Wäschestücke die Volumenmessung in der Entwässerungspresse nicht verfälschen.

Bei einem vorteilhaften Verfahren wird das Volumen des Wäschepostens in der Entwässerungspresse ermittelt durch eine Multiplikation der inneren Querschnittsfläche bzw. Grundfläche des Presskorbs mit dem Abstand der mit dem Wäscheposten in Kontakt kommenden Unterseite des Pressstempels von einer Unterseite des Presskorbs oder eines zum Abstand proportionalen Absenkwegs des Presskolbens aus seiner Ausgangsposition. Es kann so durch eine verhältnismäßig einfache Wegmessung das Volumen des Wäschepostens in der Entwässerungspresse zuverlässig ermittelt werden. Gelegentlich verfügen Entwässerungspressen bereits über Messaufnehmer für den Weg des Pressstempels, die zu anderen Zwecken verwendet werden. Diese Messaufnehmer können unter Heranziehung der Abmessungen des Presskorbs und der Positionierung der Messaufnehmer relativ zur Unterseite des Pressstempels auch zur Volumenbestimmung des Wäschepostens herangezogen werden. Dann kann das erfindungsgemäße Verfahren gegebenenfalls ohne Modifikationen der Entwässerungspresse vorgenommen werden.

Das Verfahren kann gegebenenfalls derart weitergebildet sein, dass aufgrund der Volumenmessung in der Entwässerungspresse angepasste oder korrigierte Gewichte für insbesondere spätere in der Wäschereimaschine zu behandelnde Wäscheposten bezogen auf die jeweilige Art der Wäsche und/oder das betreffende Behandlungsprogramm abgespeichert werden. Bevorzugt erfolgt diese Abspeicherung bezogen auf das jeweilige Behandlungsprogramm, beispielsweise ein Waschprogramm in einer Waschmaschine. Wenn dann beim Wechsel der Wäscheart das entsprechende Waschprogramm abgerufen wird, stehen die vorher für Wäsche gleicher Art ermittelten Messwerte wieder zur Verfügung. Diese früheren Messwerte können dann herangezogen werden, um die Wäschereimaschine später wieder mit Wäscheposten aus Wäsche der betreffenden Art optimal zu beladen. Durch die Abspeicherung vorheriger Werte stehen zu jedem Waschprogramm die vorher ermittelten Werte zur optimalen Beladung der Wäschereimaschine wieder zur Verfügung, und zwar auch schon für den ersten Wäscheposten eines neu gewählten Waschprogramms, wenn die Volumenmessung des Wäschepostens nach der Behandlung desselben in beispielsweise einer Waschmaschine erfolgt. Durch nachfolgende Volumenmessungen brauchen dann nur noch kleinere Abweichungen des Volumens des jeweiligen Wäschepostens zum Aufnahmevolumen der Wäschereimaschine ermittelt zu werden. Daraufhin können dann anhand der folgenden, während des gleichen Waschprogramms gemessenen Volumen eines oder vorzugsweise mehrerer Wäscheposten Feinjustierungen oder Nachjustierungen des Gewichts der nächsten Wäscheposten vorgenommen werden, wodurch Abweichungen der Wäschedichte aus verschiedenen Wäschechargen trotz der Behandlung mit dem gleichen Waschprogramm durch das erfindungsgemäße Verfahren eleminierbar sind.

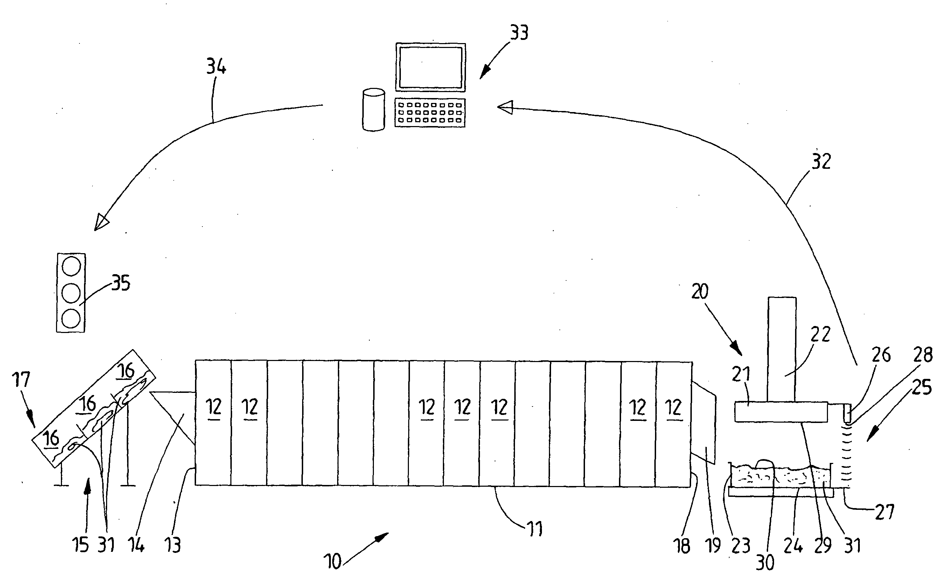

Ein bevorzugtes Ausführungsbeispiel der Erfindung wird nachfolgend anhand der Zeichnung näher erläutert. Dazu zeigt die einzige Figur der Zeichnung schematisch eine als Durchlaufwaschmaschine ausgebildete Wäschereimaschine mit einer nachfolgenden Entwässerungspresse zur Volumenmessung des in der Durchlaufwaschmaschine jeweils behandelten Wäschepostens.

Die Erfindung wird im Folgenden im Zusammenhang mit einer als Waschmaschine ausgebildeten Wäschereimaschine erläutert. Bei der Waschmaschine 10 handelt es sich um eine nur schematisch dargestellte Durchlaufwaschmaschine mit einer drehend antreibbaren Trommel 11, in der mehrere in Behandlungsrichtung aufeinanderfolgende Kammern 12 gebildet sind. An einem vorderen Beladeende 13 verfügt die Waschmaschine 10 über einen Beladetrichter 14. Über den Beladetrichter 14 wird die Waschmaschine 10 mit einem Wäscheposten 31 beladen. Der Wäscheposten 31 ist so bemessen, dass er der Kapazität aller aufeinanderfolgenden Kammern 12 der Waschmaschine 10 entspricht.

Zum mechanisierten Beladen ist vor dem Beladeende 13 der Waschmaschine 10 ein Beladeförderer 15 vorgesehen. Der Beladeförderer 15 ermöglicht die Ermittlung des Gewichts der sich auf dem Beladeförderer 15 befindenden Wäsche. Zu diesem Zweck steht der Beladeförderer 15 beispielsweise auf Gewichtsaufnehmern. Der Beladeförderer 15 weist ein umlaufend antreibbares Förderband, insbesondere ein Taschenförderband mit mehreren aufeinanderfolgenden Taschen 16, zur Aufnahme jeweils mehrerer Wäschestücke auf. Der Beladeförderer 15 ist der Waschmaschine 10 derart vorgeordnet, dass er die Wäsche von einem unteren Beschickungsende 17 schräg aufwärts in den Beladetrichter 14 transportiert. Dabei wird die Wäsche von den Gewichtsaufnehmern gewogen. Die Wäsche wird auf dem Beschickungsende 17 des Beladeförderers 15 vorzugsweise durch nicht gezeigte Bedienungspersonen manuell aufgegeben. Die Wäsche kann aber auch von nicht gezeigten Förderern dem Beschickungsende 17 des Beladeförderers 15 zugeführt werden.

Alternativ zum Beladeförderer 15 ist es denkbar, die Wäsche auf andere Weise der Waschmaschine 10 zuzuführen und so die Beladung vorzunehmen. Beispielsweise kann die Wäsche aus Wäschesäcken postenweise dem Beladetrichter 14 zugeführt werden.

Die fertig gewaschene Wäsche verlässt die Waschmaschine 10 über ein dem Beladeende 13 gegenüberliegendes, hinteres Entladeende 18. Dem Entladeende 18 ist eine Entladerutsche 19 zugeordnet, womit ein fertig gewaschener Wäscheposten 31 aus der letzten Kammer 12 der Waschmaschine 10 heraustransportierbar ist.

Hinter der Waschmaschine 10 befindet sich eine Entwässerungspresse 20. Der in der Waschmaschine 10 gewaschene Wäscheposten 31 ist über die Entladerutsche 19 entweder direkt oder mittels eines zwischengeschalteten Förderers in die Entwässerungspresse 20 überführbar.

Die in der Figur nur schematisch dargestellte Entwässerungspresse 20 verfügt über einen Pressstempel 21, der von einem Hydraulikzylinder 22 auf- und abbewegbar ist. Weiterhin verfügt die Entwässerungspresse 20 über einen Presskorb 23. Der Presskorb 23 ist derart korrespondierend zum Pressstempel 21 ausgebildet, dass der Pressstempel 21 von oben in den Presskorb 23 hineinfahren kann und dabei die von der Waschmaschine 10 stammende Wäsche eines gesamten Wäschepostens 31 zusammenpressen und entwässern kann. Der Presskorb 23 ruht auf einer Unterlage 24. Bei der Unterlage 24 kann es sich um einen umlaufenden Gurtförderer handeln, auf dessen Obertrum der Presskorb 23 mit dem sich darin befindlichen Wäscheposten 31 aufliegt. Durch den Förderer kann der Wäscheposten nach der Entwässerung aus dem Bereich der Entwässerungspresse 20 abtransportiert werden. Außerdem kann die Unterlage 24, insbesondere das Obertrum des Förderers, flüssigkeitsdurchlässig sein zur Abfuhr von aus dem Wäscheposten 31 herausgepresster Flüssigkeit, beispielsweise in der Wäsche gebundene Spülflüssigkeit und/oder Klarwaschflüssigkeit.

Die Entwässerungspresse 20 verfügt über eine Abstandsmesseinrichtung 25, womit der Abstand des Pressstempels 21 von der Unterseite des Presskorbs 23 bzw. der Unterlage 24 ermittelbar ist. Die beispielsweise berührungslos arbeitende Abstandsmesseinrichtung 25 verfügt über einen Signalgeber 26 am auf- und abfahrbaren Pressstempel 21 und einen vorzugsweise ortsfesten Signalaufnehmer 27 in der zur Anlage unter dem Presskorb 23 kommenden Ebene der Unterlage 24. Ein unteres Bezugsende 28 des Signalgebers 26 liegt im gezeigten Ausführungsbeispiel in der gleichen Ebene, in der sich eine vorzugsweise ebene Unterseite 29 des Pressstempels 21 befindet. Auf diese Weise ist von der Abstandsmesseinrichtung 25 berührungslos, beispielsweise nach dem Ultraschallprinzip, der Abstand zwischen der mit der Oberseite 30 des Wäschepostens 31 im Presskorb 23 in Kontakt kommenden Unterseite 29 des Pressstempels 21 und der Unterseite des Presskorbs 23 bzw. der Unterlage 24 ermittelbar.

Es ist auch denkbar, den Signalgeber 26 und/oder den Signalaufnehmer 27 der Abstandsmesseinrichtung 25 an anderen Stellen des Pressstempels 21 und des Presskorbs 23 bzw. Unterlage 24 anzuordnen, sofern sich diese Stelle relativ zum auf- und abbewegbaren Pressstempel 21 und zum Presskorb 23 bzw. der Unterlage 24 nicht ändert. Infolge der sich nicht ändernden, festen Abstände des Signalgebers 26 und des Signalaufnehmers 27 zur Unterseite 29 des Pressstempels 21 und zur Unterseite des Presskorbs 23 bzw. zur Oberseite der Unterlage 24 kann rechnerisch stets der Abstand zwischen der Unterseite 29 des Pressstempels 21 zur quasi einen Boden des Presskorbs 23 bildenden Unterlage 24, beispielsweise ein Obertrum des die Unterlage 24 bildenden Förderers, ermittelt werden. Die Erfindung kann auch mit anderen, üblichen Abstandsmesseinrichtungen durchgeführt werden.

Die Abstandsmesseinrichtung 25 ist über eine Datenleitung 32 mit der Steuerung der Waschmaschine 10 oder einer sonstigen Wäschereimaschine verbunden. Die Steuerung enthält einen Rechner und einen Speicher für vorzugsweise mehrere Messwerte der Abstandsmesseinrichtung 25 und vorgebbare Sollwerte, insbesondere des Nenngewichts jedes Wäschepostens 31 und des Aufnahmevolumens der Waschmaschine 10, insbesondere einer Kammer 12, wenn alle Kammern 12 über das gleiche Aufnahmevolumen verfügen oder das Aufnahmevolumen der kleinsten Kammer 12, wenn nicht alle Kammern 12 das gleiche Aufnahmevolumen haben. Über eine weitere Datenleitung 34 ist die Steuerung 33 verknüpft mit einer visuellen Anzeigeeinrichtung, die im gezeigten Ausführungsbeispiel nach Art einer Ampel 35 ausgebildet ist. Die Ampel 35 zeigt einer Bedienungsperson, die die Wäsche am Beschickungsende 17 auf den Beladeförderer 15 aufgibt, ob der Wäscheposten 31 das gewünschte Gewicht aufweist, indem beispielsweise ein grünes Licht signalisiert, dass der Wäscheposten 31 noch nicht das gewünschte Gewicht erreicht hat und das gelbe Licht anzeigt, dass das gewünschte Gewicht des Wäschepostens 31 nahezu erreicht ist und das rote Licht der Bedienungsperson signalisiert, dass keine weitere Wäsche auf den Beladeförderer 15 aufgegeben werden kann, weil der Wäscheposten sein vorgegebenes Gewicht erreicht hat.

Nachfolgend wird das erfindungsgemäße Verfahren unter Bezugnahme auf die zuvor beschriebene Waschmaschine 10 und die ihr nachgeordnete Entwässerungspresse 20 erläutert:
Im Folgenden wird davon ausgegangen, dass in der Steuerung 33 noch keine Volumenmesswerte aus vorherigen Messungen des Volumens des Wäschepostens 31 in der Entwässerungspresse 20 abgespeichert sind. Dann befinden sich in der Steuerung 33 nur verschiedene wäschespezifische Waschprogramme, das Nenngewicht des Wäschepostens 31, womit die Waschmaschine 10, insbesondere die jeweilige Kammer 12 derselben, beladen werden kann, um das für jede Kammer 12 gleiche Aufnahmevolumen bzw. das Aufnahmevolumen der kleinsten Kammer 12. Das Aufnahmevolumen entspricht dem Volumen des Wäschepostens 31, womit die Waschmaschine 10 ohne Beeinträchtigungen der Wäschequalität und Funktion maximal beladen werden kann.

Bei der ersten Beladung der Waschmaschine 10 wird ein Wäscheposten 31 gebildet, dessen Gewicht dem Nenngewicht der Beladung der Waschmaschine 10 entspricht. Dieses Nenngewicht ist in der Regel für alle Waschprogramme gleich, ebenso wie das Aufnahmevolumen. Während das Aufnahmevolumen bei allen Waschprogrammen gleich sein muss, weil es maßgebend ist zur Vermeidung einer Verblockungsgefahr und Postenverschleppung, kann das Gewicht des Wäschepostens bei den einzelnen Waschprogrammen unterschiedlich sein, weil die Wäsche je nach ihrer Art über unterschiedliche Dichten verfügt. Beispielsweise hat Frotteewäsche ein im Vergleich zur Flachwäsche geringeres Raumgewicht bzw. spezifisches Gewicht.

Die Bedienungsperson beschickt den Beladeförderer 15 nur so lange mit Wäsche, bis die Ampel 35 durch ein rotes Licht das Erreichen des in der Steuerung 33 zunächst abgespeicherten Nenngewichts des Wäschepostens 31 erreicht hat. Die Waschmaschine 10 wird nun vom Beladeförderer 15 über den Beladetrichter 14 mit dem das Nenngewicht aufweisenden Wäscheposten 31 beladen.

Nachdem der Wäscheposten alle Kammern 12 der Trommel 11 der Waschmaschine 10 durchlaufen hat, wird der gewaschene Wäscheposten 31 über die Entladerutsche 19 aus der Waschmaschine 10 entladen und bei hochgefahrenem Presstempel 21 in den Presskorb 23 der Entwässerungspresse 20 überführt. Es wird nun vor dem Entwässern des Wäschepostens 31 in bzw. von der Entwässerungspresse 20 das Volumen des noch nicht entwässerten Wäschepostens 31 in der Entwässerungspresse 20, insbesondere im Presskorb 23 derselben, ermittelt.

Die Ermittlung des Volumens des Wäschepostens 31 mittels der Entwässerungspresse 20 erfolgt beim Herunterfahren des Pressstempels 21 auf die Wäsche des Wäschepostens 31 im Presskorb 23, und zwar zu einem Zeitpunkt, indem der Pressstempel 21 vom Hydraulikzylinder 22 so weit auf bzw. in den Presskorb 23 heruntergefahren ist, dass die Unterseite 29 des Pressstempels 21 mit der obenliegenden Wäsche des Wäschepostens 31 im Presskorb 23 in Kontakt kommt. Insbesondere wird das Volumen des Wäschepostens 31 im Presskorb 23 zu einem Zeitpunkt ermittelt, zu dem der Pressstempel 21 einen definierten Vordruck auf den Wäscheposten 31 ausübt. Dieser definierte Vordruck kann vom Pressstempel 21 auf die Oberseite 30 des Wäschepostens 31 vorzugsweise dann ausgeübt werden, wenn der Vordruck, womit die Unterseite 29 des Pressstempels 21, vorzugsweise ein darunter angeordneter elastisch verformbarer Hohlkörper aus Gummi oder dergleichen, eine sogenannte Membran, auf die Wäsche des Wäschepostens 31 drückt, zwischen 0,5 bar und 10 bar liegt, insbesondere etwa 0,5 bar bis 5 bar beträgt. Dieser Vordruck ist bezogen auf verschiedene Wäschearten, insbesondere Gewebearten der Wäsche, parametrierbar. Dadurch kann Wäsche unterschiedlicher Art mit einem für die Volumenmessung optimalen Vordruck beaufschlagt werden. Zu dem Zeitpunkt, indem die Unterseite 29 des Presstempels 21 die Oberseite 30 der Wäsche des Wäschepostens 31 im Presskorb 23 berührt, insbesondere einen definierten Druck auf die Oberseite 30 des Wäschepostens 31 ausübt, ermittelt die Abstandsmesseinrichtung 25 den Abstand zwischen der Unterseite 29 des Pressstempels 21 und der Oberseite der Unterlage 24, worauf die Unterseite des Presskorbs 23 aufliegt. Alternativ kann ein Abstandsmaß ermittelt werden, das proportional zum Abstand zwischen der Unterseite 29 des Pressstempels 21 und der Unterlage 24, auf dem der Presskorb 23 ruht, ist. Aus diesem Abstandsmaß lässt sich dann die Höhe des Wäschepostens 31 unter dem Presskorb 23 ermitteln. Diese Höhe des Wäschepostens 31 im Presskorb 23 ergibt multipliziert mit dem inneren Querschnitt bzw. der inneren Fläche des Presskorbs 23 das Volumen des noch nicht entwässerten und somit nicht oder nicht nennenswert zusammengepressten Wäschepostens 31, so dass es dem tatsächlichen Volumen des Wäschepostens 31 entspricht.

Es erfolgt nun in der Steuerung 33 ein Vergleich des in der Entwässerungspresse 20 ermittelten tatsächlichen Volumens des Wäschepostens 31 mit dem in der Steuerung 33 hinterlegten Aufnahmevolumen der Kammern 12 oder der kleinsten Kammer 12 der Waschmaschine 10. Der Rechner der Steuerung 33 ermittelt jetzt den Quotienten aus dem Nennvolumen und dem in der Entwässerungspresse 20 gemessenen Volumen. Dieser Quotient ergibt einen Korrekturfaktor zur Veränderung des Gewichts des Wäschepostens 31, womit die Waschmaschine 10 als nächstes beladen wird. Ist der Korrekturfaktor größer als 1, also das Aufnahmevolumen größer als das gemessene Volumen des Wäschepostens 31, wird das Gewicht des als nächstes zum Beladen der Waschmaschine 10 zu bildenden Wäschepostens 31 erhöht, nämlich mit dem Korrekturfaktor multipliziert. Umgekehrt wird bei einem Korrekturfaktor unter 1, wenn das Nennvolumen kleiner als das gemessen Volumen, das Gewicht des nächsten Wäschepostens 31 reduziert durch Multiplikation mit dem kleineren Korrekturfaktor.

Damit der Fall, in dem das gemessen Volumen die Aufnahmekapazität überschreitet, nicht eintritt, wird das in die Steuerung 33 einzugebende Nenngewicht des Wäschepostens 31 so gewählt, dass bei jedem Waschprogramm, selbst bei einem Wäscheposten 31 aus sehr voluminösen Wäschestücken, die zu Verblockungen und Postenverschleppungen führende Aufnahmekapazität mit Sicherheit nicht erreicht wird.

In der vorstehend beschriebenen Weise wird die Volumenmessung des Wäschepostens 31 in der Entwässerungspresse 20 auch an nachfolgenden Wäscheposten 31 durchgeführt. Es werden so nach und nach Korrekturfaktoren zur Änderung des Gewichts des Wäschepostens 31, womit die Waschmaschine 10 als nächstes zu beladen ist, ermittelt. Auf diese Weise wird sukzessiv bzw. iterativ das Gewicht als nächstes zu beschickender Wäscheposten 31 korrigiert im Hinblick auf die Beladung der Waschmaschine 10 mit Wäscheposten 31, deren Volumen möglichst genau dem Aufnahmevolumen der Klammern 12 der Waschmaschine 10 entspricht. Die Ergebnisse der aufeinanderfolgenden Messung unterschiedlicher Wäscheposten 31 in der Entwässerungspresse 20 und/oder die dabei ermittelten Korrekturfaktoren werden allesamt vorzugsweise in der Steuerung 33 abgespeichert.

Es ist denkbar, mehrere Volumenmesswerte bzw. Korrekturfaktoren statistisch auszuwerten, insbesondere durch Mittelwertbildung. So kann durch laufende Korrektur der Gewichte nachfolgender Wäscheposten 31 das maximale Aufnahmevolumen der Klammern 12 der Waschmaschine 10 ausgenutzt werden, und zwar gegebenenfalls auch vorausschauend. Außerdem ist es durch die statistische Auswertung möglich, Schwankungen in der Zusammensetzung der Wäsche von Wäscheposten 31 für das gleiche Waschprogramm zu berücksichtigen, indem das Volumen neu gebildeter Wäscheposten 31 das Aufnahmevolumen, insbesondere Nennvolumen, der Klammern 12 der Waschmaschine 10 nicht überschreitet.

Die vorstehend beschriebene Vorgehensweise wird für jedes Waschprogramm durchgeführt, wobei die in der Entwässerungspresse 20 ermittelten Volumenwerte der Wäscheposten 31 mit gewaschener Wäsche in der Steuerung 33 jeweils für das betreffende Waschprogramm abgespeichert werden. Dadurch stehen Korrekturwerte für das Gewicht neu zu bildender Wäscheposten gleich zu Anfang jedes Waschprogramms zur Verfügung, indem auf Korrekturwerte zurückgegriffen wird, die gespeichert worden sind anhand von Wäscheposten 31, deren Volumen in der Entwässerungspresse 20 ermittelt wurde beim vorhergehenden Waschen von Wäscheposten 31 mit dem gleichen Waschprogramm.

### Bezugszeichenliste:

- 10: Waschmaschine
- 11: Trommel
- 12: Kammer
- 13: Beladeende
- 14: Beladetrichter
- 15: Beladeförderer
- 16: Tasche
- 17: Beschickungsende
- 18: Entladeende
- 19: Entladerutsche
- 20: Entwässerungspresse
- 21: Pressstempel
- 22: Hydraulikzylinder
- 23: Presskorb
- 24: Unterlage
- 25: Abstandsmesseinrichtung
- 26: Signalgeber
- 27: Signalaufnehmer
- 28: Bezugsende
- 29: Unterseite
- 30: Oberseite
- 31: Wäscheposten
- 32: Datenleitung
- 33: Steuerung
- 34: Datenleitung
- 35: Ampel

## Patentansprüche

1. Verfahren zum Beladen einer Wäschereimaschine, vorzugsweise einer Waschmaschine (10), mit Wäsche, wobei die Wäsche vor dem Beladen der Wäschereimaschine gewogen und daraufhin ein zum Beladen der Wäschereimaschine geeigneter Wäscheposten (31) mit einem bestimmten Gewicht gebildet wird, **dadurch gekennzeichnet, dass** in einer Entwässerungspresse (20) das Volumen des Wäschepostens (31) ermittelt und mit dem Aufnahmevolumen der Wäschereimaschine verglichen wird, wobei anhand dieses Vergleichs eine Gewichtsanpassung mindestens eines Wäschepostens (31) vorgenommen wird.

2. Verfahren nach Anspruch 1, **dadurch gekennzeichnet, dass** das Volumen eines in der Wäschereimaschine zu behandelnden Wäschepostens (31) in der Entwässerungspresse (20) vorzugsweise hinter der Wäschereimaschine ermittelt wird.

3. Verfahren nach Anspruch 1 oder 2, **dadurch gekennzeichnet, dass** verglichen wird, ob das Aufnahmevolumen der Wäschereimaschine dem in der Entwässerungspresse (20) ermittelten Volumen des Wäschepostens (31) entspricht und beim Unterschreiten des Aufnahmevolumens Wäscheposten mit größerem Gewicht und bei Überschreitung des Aufnahmevolumens Wäscheposten (31) mit geringerem Gewicht gebildet werden.

4. Verfahren nach einem der vorhergehenden Ansprüche, **dadurch gekennzeichnet, dass** das Volumen des von der Wäschereimaschine behandelnden Wäschepostens (31) in der Entwässerungspresse (20) ermittelt wird und in Abhängigkeit von dem dabei ermittelten Volumen des behandelten Wäschepostens (31) das Gewicht mindestens eines anderen zur Beladung der Wäschereimaschine vorgesehenen Wäschepostens (31) so verändert wird, dass das zu erwartende Volumen dieses Wäschepostens (31) dem Aufnahmevolumen der Wäschereimaschine mindestens weitgehend entspricht.

5. Verfahren nach einem der vorhergehenden Ansprüche, **dadurch gekennzeichnet, dass** durch eine Volumenmessung mehrerer oder aller Wäscheposten (31) in der Entwässerungspresse (20) iterativ, insbesondere aufgrund der Ergebnisse der Volumenmessungen mehrerer unterschiedlicher Wäscheposten (31), das Gewicht späterer Wäscheposten (31) verändert wird zur Bildung späterer Wäscheposten (31) mit einem Volumen, das dem Aufnahmevolumen der Wäschereimaschine entspricht oder zumindest annähernd entspricht.

6. Verfahren nach einem der vorhergehenden Ansprüche, **dadurch gekennzeichnet, dass** die Anpassung des Gewichts späterer Wäscheposten (31) zur Beladung der Wäschereimaschine an das in der Entwässerungspresse (20), insbesondere im Nachhinein, ermittelte Volumen des Wäschepostens (31) bezogen auf Wäscheposten (31) aus Wäsche gleicher Art und/oder gleicher Behandlungskriterien vorgenommen wird.

7. Verfahren nach einem der vorhergehenden Ansprüche, **dadurch gekennzeichnet, dass** das Volumen des Wäschepostens (31) in der Entwässerungspresse (20) ermittelt wird, wenn ein Pressstempel (21) der Entwässerungspresse (20) so weit in einen den Wäscheposten (31) aufnehmenden Presskorb (23) eingefahren ist, bis eine Unterseite (29) des Pressstempels (21) in Kontakt mit der obenliegenden Wäsche im Presskorb (23) getreten ist.

8. Verfahren nach einem der vorhergehenden Ansprüche, **dadurch gekennzeichnet, dass** das Volumen des Wäschepostens (31) ermittelt wird, sobald der Pressstempel (21) einen definierten Druck bzw. Vordruck von vorzugsweise 0,5 bar bis 10 bar auf den Wäscheposten (31) im Presskorb (23) ausübt.

9. Verfahren nach einem der vorhergehenden Ansprüche, **dadurch gekennzeichnet, dass** das Volumen des Wäschepostens (31) in der Entwässerungspresse (20) ermittelt wird durch Multiplikation der inneren Querschnittsfläche bzw. Grundfläche des Presskorbs (23) mit dem Abstand der mit der Wäsche in Kontakt getretenen Unterseite (29) des Pressstempels (21) von einer Unterseite des Presskorbs (23) bzw. einer Unterlage (24), worauf der Presskorb (23) aufliegt oder eines zum Abstand proportionalen Absenkwegs des Pressstempels (21) aus seiner Ausgangsposition.

10. Verfahren nach einem der vorhergehenden Ansprüche, **dadurch gekennzeichnet, dass** aufgrund der Volumenmessung in der Entwässerungspresse (20) angepasste oder korrigierte Gewichte für spätere zur Beladung der Wäschereimaschine dienende Wäscheposten (31) bezogen auf die jeweilige Art der Wäsche und/oder das betreffende Behandlungsprogramm des mindestens einen der der Volumenmessung unterzogenen Wäschepostens (31), vorzugsweise mehrere Wäscheposten (31), abgespeichert und herangezogen werden zur Gewichtsbestimmung mindestens eines anderen bzw. später zur Beladung der Wäschereimaschine dienenden Wäschepostens (31) mit gleichartiger Wäsche und/oder beim gleichen Waschprogramm.

## Claims

1. Method for loading a laundry machine, preferably a washing machine (10), with laundry, with the laundry being weighed before the laundry machine is loaded and then a batch (31) of laundry which is suitable for loading the laundry machine and which has a specific weight being formed, **characterized in that** the volume of the batch (31) of laundry is ascertained in a water-removal press (20) and compared with the receiving volume of the laundry machine, with the weight of at least one batch (31) of laundry being adjusted on the basis of this comparison.

2. Method according to Claim 1, **characterized in that** the volume of a batch (31) of laundry which is to be treated in the laundry machine is ascertained in the water-removal press (20), preferably downstream of the laundry machine.

3. Method according to Claim 1 or 2, **characterized in that** a comparison is made to determine whether the receiving volume of the laundry machine corresponds to the volume of the batch (31) of laundry which is ascertained in the water-removal press (20) and batches of laundry which have a greater weight are formed if the receiving volume is undershot, and batches (31) of laundry which have a lower weight are formed if the receiving volume is exceeded.

4. Method according to one of the preceding claims, **characterized in that** the volume of the batch (31) of laundry which is treated by the laundry machine is ascertained in the water-removal press (20) and the weight of at least one other batch (31) of laundry which is intended to be loaded into the laundry machine is changed as a function of the volume of the treated batch (31) of laundry ascertained in the process such that the expected volume of this batch (31) of laundry at least largely corresponds to the receiving volume of the laundry machine.

5. Method according to one of the preceding claims, **characterized in that**, by measuring the volume of several or all the batches (31) of laundry iteratively in the water-removal press (20), in particular on the basis of the results of the volume measurements of several different batches (31) of laundry, the weight of subsequent batches (31) of laundry is changed in order to form subsequent batches (31) of laundry with a volume which corresponds or at least approximately corresponds to the receiving volume of the laundry machine.

6. Method according to one of the preceding claims, **characterized in that** the process of matching the weight of subsequent batches (31) of laundry for loading the laundry machine to the volume of the batch (31) of laundry which is ascertained in the water-removal press (20), in particular in retrospect, is performed in relation to batches (31) of laundry comprising laundry of the same type and/or having the same treatment criteria.

7. Method according to one of the preceding claims, **characterized in that** the volume of the batch (31) of laundry is ascertained in the water-removal press (20) when a pressing ram (21) of the water-removal press (20) is extended into a pressing basket (23) which accommodates the batch (31) of laundry until a lower face (29) of the pressing ram (21) comes into contact with the laundry at the top in the pressing basket (23).

8. Method according to one of the preceding claims, **characterized in that** the volume of the batch (31) of laundry is ascertained as soon as the pressing ram (21) exerts a defined pressure or admission pressure of preferably 0.5 bar to 10 bar on the batch (31) of laundry in the pressing basket (23).

9. Method according to one of the preceding claims, **characterized in that** the volume of the batch (31) of laundry in the water-removal press (20) is ascertained by multiplying the inner cross-sectional area or base area of the pressing basket (23) by the distance of the lower face (29) of the pressing ram (21), which lower face comes into contact with the laundry, from a lower face of the pressing basket (23) or a support (24) on which the pressing basket (23) rests, or by a lowering movement of the pressing ram (21) out of its starting position, which lowering movement is proportional to the said distance.

10. Method according to one of the preceding claims, **characterized in that**, on the basis of the volume measurement in the water-removal press (20), adjusted or corrected weights for batches (31) of laundry which are to be subsequently loaded into the laundry machine are stored based on the respective type of laundry and/or the relevant treatment program of the at least one batch (31) of laundry which is subject to the volume measurement, preferably several batches (31) of laundry, and are used to determine the weight of at least one other or subsequent batch (31) of laundry which is to be loaded into the laundry machine and comprises the same type of laundry and/or with the same washing program.

## Revendications

1. Procédé de chargement d'une machine de laverie, de préférence d'un lave-linge (10), avec du linge, dans lequel on pèse le linge avant le chargement de la machine de laverie et on forme ensuite un paquet de linge (31) d'un poids déterminé approprié pour le chargement de la machine de laverie, **caractérisé en ce que** l'on détermine le volume du paquet de linge (31) dans une presse d'essorage (20) et on le compare avec la capacité de la machine de laverie, dans lequel on procède à une adaptation du poids d'au moins un paquet de linge (31) en se basant sur cette comparaison.

2. Procédé selon la revendication 1, **caractérisé en ce que** l'on détermine dans la presse d'essorage (20) le volume d'un paquet de linge (31) à traiter dans la machine de laverie, de préférence derrière la machine de laverie.

3. Procédé selon la revendication 1 ou 2, **caractérisé en ce que** l'on compare si la capacité de la machine de laverie correspond au volume du paquet de linge (31) déterminé dans la presse d'essorage (20) et si la capacité est supérieure on forme des paquets de linge de poids plus élevé et si la capacité est inférieure on forme des paquets de linge (31) de poids plus faible.

4. Procédé selon l'une quelconque des revendications précédentes, **caractérisé en ce que** l'on détermine dans la presse d'essorage (20) le volume du paquet de linge (31) à traiter dans la machine de laverie et, en fonction du volume ainsi déterminé du paquet de linge à traiter (31), on change le poids d'au moins un autre paquet de linge (31) prévu pour le chargement de la machine de laverie, de telle manière que le volume attendu de ce paquet de linge (31) corresponde au moins largement à la capacité de la machine de laverie.

5. Procédé selon l'une quelconque des revendications précédentes, **caractérisé en ce que**, par une mesure de volume de plusieurs ou de tous les paquets de linge (31) dans la presse d'essorage (20), on change de façon itérative, en particulier sur la base des résultats des mesures de volume de plusieurs paquets de linge différents (31), le poids de paquets de linge ultérieurs (31) pour la formation de paquets de linge ultérieurs (31) avec un volume, qui correspond ou qui correspond au moins approximativement à la capacité de la machine de laverie

6. Procédé selon l'une quelconque des revendications précédentes, **caractérisé en ce que** l'on effectue l'adaptation du poids de paquets de linge ultérieurs (31) pour le chargement de la machine de laverie au volume du paquet de linge (31) déterminé, en particulier après coup, dans la presse d'essorage (20), par rapport à des paquets de linge (31) constitués de linge de même nature et/ou ayant les mêmes critères de traitement.

7. Procédé selon l'une quelconque des revendications précédentes, **caractérisé en ce que** l'on détermine le volume du paquet de linge (31) dans la presse d'essorage (20), lorsqu'un tampon de presse (21) de la presse d'essorage (20) est enfoncé dans un panier de presse (23) contenant le paquet de linge (31) jusqu'à ce qu'une face inférieure (29) du tampon de presse (21) vienne en contact avec le linge le plus haut dans le panier de presse (23).

8. Procédé selon l'une quelconque des revendications précédentes, **caractérisé en ce que** l'on détermine le volume du paquet de linge (31), dès que le tampon de presse (21) exerce une pression ou une pré-compression définie de préférence de 0,5 à 10 bar sur le paquet de linge (31) dans le panier de presse (23).

9. Procédé selon l'une quelconque des revendications précédentes, **caractérisé en ce que** l'on détermine le volume du paquet de linge (31) dans la presse d'essorage (20) en multipliant la surface de la section transversale intérieure ou la surface du fond du panier de presse (23) par la distance entre la face inférieure (29) du tampon de presse (21) venue en contact avec le linge et une face inférieure du panier de presse (23) ou un support (24) sur lequel le panier de presse (23) repose ou d'une course de descente du tampon de presse (21), proportionnelle à cette distance, à partir de sa position initiale.

10. Procédé selon l'une quelconque des revendications précédentes, **caractérisé en ce que** l'on mémorise et on utilise des poids adaptés ou corrigés sur la base de la mesure de volume dans la presse d'essorage (20) pour des paquets de linge (31) destinés au chargement de la machine de laverie, par rapport à la nature respective du linge et/ou au programme de traitement concerné dudit au moins un paquet de linge (31), de préférence de plusieurs paquets de linge (31), soumis à la mesure de volume, en vue de la détermination du poids d'au moins un autre paquet de linge (31) ou d'un paquet de linge (31) destiné plus tard au chargement de la machine de laverie composé de linge de même nature et/ou soumis au même programme de lavage.
